Europäisches Patentamt

European Patent Office

Office européen des brevets

(11) Publication number: **0 446 498 A2**

# EUROPEAN PATENT APPLICATION

(21) Application number: 90203524.5

(51) Int. Cl.⁵: **B60D 1/60**

(22) Date of filing: 28.12.90

(30) Priority: 06.02.90 NL 9000287

(43) Date of publication of application:
18.09.91 Bulletin 91/38

(84) Designated Contracting States:
BE DE DK FR GB NL SE

(71) Applicant: **MEWAHO BEHEER B.V.**
Hanzeweg 27
NL-7591 BK Denekamp(NL)

(72) Inventor: **Hogeling, Gerhardus Jozef**
Hanzeweg 27a
NL-7591 BK Denekamp(NL)

(74) Representative: **Schumann, Bernard Herman Johan et al**
**OCTROOIBUREAU ARNOLD & SIEDSMA**
Sweelinckplein 1
NL-2517 GK The Hague(NL)

(54) Protection of the coupling between a motor vehicle and a trailer.

(57) The invention provides a device for locking the coupling between a motor vehicle, for example a passenger car, and a trailer, for example a caravan, which coupling comprises a tow-hook with ball arranged on the motor vehicle and a drawbar arranged on the trailer at the free end of which a coupling means such as a hook, eye or cover, for coupling to the towing hook, is arranged with blocking means, which device encloses a space wherein the coupling fits with small clearance and is provided with locking means closable by means of a lock, in the position whereof that is closed and arranged round a coupling at least the blocking means are inoperable.

FIG.1

## PROTECTION OF THE COUPLING BETWEEN A MOTOR VEHICLE AND A TRAILER

It is a known problem that persons of malicious intent can easily break the coupling between a motor vehicle and a trailer, in particular between a passenger car and a caravan, after which decoupling either the car or the caravan can be stolen.

In order to solve this problem the invention provides a device for locking the coupling between a motor vehicle, for example a passenger car, and a trailer, for example a caravan, which coupling comprises a tow-hook with ball arranged on the motor vehicle and a drawbar arranged on the trailer at the free end of which a coupling means such as a hook, eye or cover, for coupling to the towing hook, is arranged with blocking means, which device encloses a space wherein the coupling fits with small clearance and is provided with locking means closable by means of a lock, in the position whereof that is closed and arranged round a coupling at least the blocking means are inoperable.

In preference the device has the feature that it comprises two mutually movable parts which in the position of use are mutually lockable by the locking means. This embodiment has the advantage that the device can be arranged on a coupling situated in the position of use, and therefore in the position where the trailer is coupled to the motor vehicle.

The two parts can be separate or connected movably to one another, for example hingeably or slidably. The two parts may also be integral, for instance of plate metal that is bent such that the two parts are more or less flexibly connected to one another.

A preferred embodiment has the feature that the locking means comprise: ˙

co-acting edges engaging slidably into one another on the respective parts; and

a pin present on the one part which fits into a hole present in the other part, which pin can be locked against withdrawal at its end by a lock.

This embodiment can advantageously display the special feature that the pin has a hole at its free end for co-action with a lock.

In a particular embodiment this variant has the feature that the hole can co-act with key means that are lockable by means of a lock.

A preferred embodiment of the invention displays the feature that the hole is a slotted hole and the key means are embodied as a wedge-shaped plate with a hole on the relatively narrow zone serving for passage of the shackle of a padlock, wherein the slotted hole has a length that is smaller than the widest portion of the wedge-shaped plate. With this embodiment a very tight coupling is ensured between both parts. It will be apparent that the position of the hole, through which the shackle of the padlock can be placed, will preferably not lie far from the pin. The mobility of the key in the position of use of the device is thereby limited. The hole will preferably have a diameter such that the shackle of the padlock fits therein with only small clearance. Such steps make it difficult to force the device according to the invention.

For this same purpose the device can have the feature that the outer surface of the part in which the hole is situated for passage of the pin has bosses for locking the wedge-shaped plate against rotation. In order to prevent for instance cutting or sawing through of locking elements of the device, at least the surface of the key means can advantageously be hardened.

In order to limit as far as possible the accessibility of the lock for purposes of misuse the device may display the feature that the lock is accommodated internally in the device.

This embodiment can particularly have the feature that the lock is a padlock with a housing and a movable shackle, wherein the shackle is coupled to the device, the housing with keyhole is accessible from outside and the housing can be in locking co-action with a recess present on the pin. A very simple embodiment is one wherein the shackle is connected to the housing not pivotally but slidably. In the coupled position of the device the housing is received into an enclosed space in the device such that the keyhole is accessible from outside. When the key is operated the housing slides relative to the shackle under the influence of a spring present in the lock and the housing springs outward. The pin is thereby released from the housing of the lock and the device can be separated into two parts.

The device according to the invention also makes bolts, nuts and the like of a coupling inaccessible so that the coupling cannot be unscrewed.

The invention will now be elucidated with reference to the annexed drawing, wherein:

Fig. 1 shows a partly broken away perspective view of a device according to the invention, wherein the constituent parts are shown in exploded view;

Fig. 2 shows a partly broken away perspective view of the device according to fig. 1 in position of use;

Fig. 3 is a partly broken away perspective view corresponding with fig. 2 of another embodiment;

Fig. 4 shows a third embodiment in perspective view;

Fig. 5 shows a partly broken away perspective view of a fourth embodiment; and

Fig. 6 is a partly broken away exploded view of the device according to fig. 5.

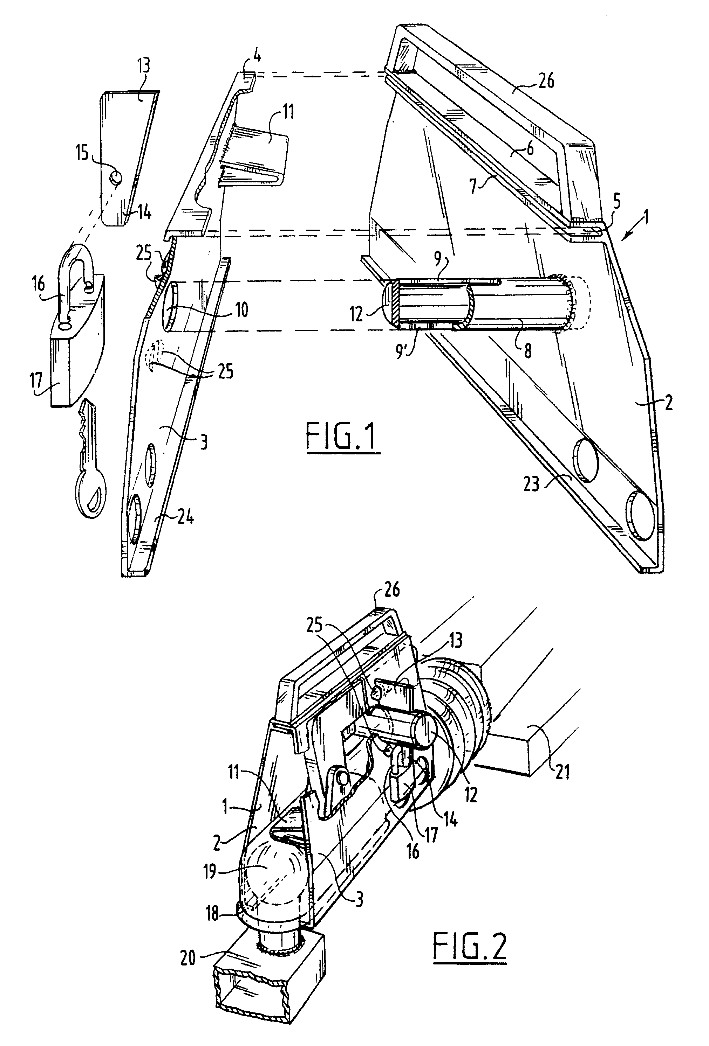

The locking device 1 as in fig. 1 comprises two more or less plate-like parts 2 and 3. The plate-like part 3 has a bent over top edge 4 which fits into a groove 5 bounded by two edges 6, 7 extending at the top of the plate-like part 2. The plate-like part 2 bears a tubular pin 8, the peripheral wall of which has a slotted hole 9, 9' on both sides. Pin 8 fits into a hole 10 located in the plate-like part 3. The plate-like part 3 further bears a protruding portion 11, the function of which will be discussed hereinbelow.

The parts 2 and 3 can be pushed into one another in the manner indicated with broken lines such that the edge 4 fits into the groove 5 and pin 8 fits into the hole 10.

As will be apparent, particularly in fig. 2, in the thus obtained position of use of the locking device 1 the free end 12 of pin 8 extends beyond the outer surface of the part 3. The slotted hole 9, 9' is hereby accessible for passage of a wedge-shaped key plate 13 which is provided on its tapering lower part 14 with a hole 15 wherethrough the shackle 16 of a padlock 17 can be placed. Fig. 2 shows the manner in which the mentioned components combine functionally.

As can be seen in fig. 2, the device extends in the position of use over a coupling cover 18 which co-acts with the ball 19 of a tow-hook 20. The protrusion 11 is positioned such that in the position of use the lower surface of the protrusion 11 is located just above the upper surface of the coupling cover 18. The tubular pin 8 also blocks the device 1 against tilting relative to the coupling. This further obstructs access thereto. The coupling cover 18 is arranged on the free end of a drawbar 21 of a caravan, while the tow-hook 20 is connected to a passenger car.

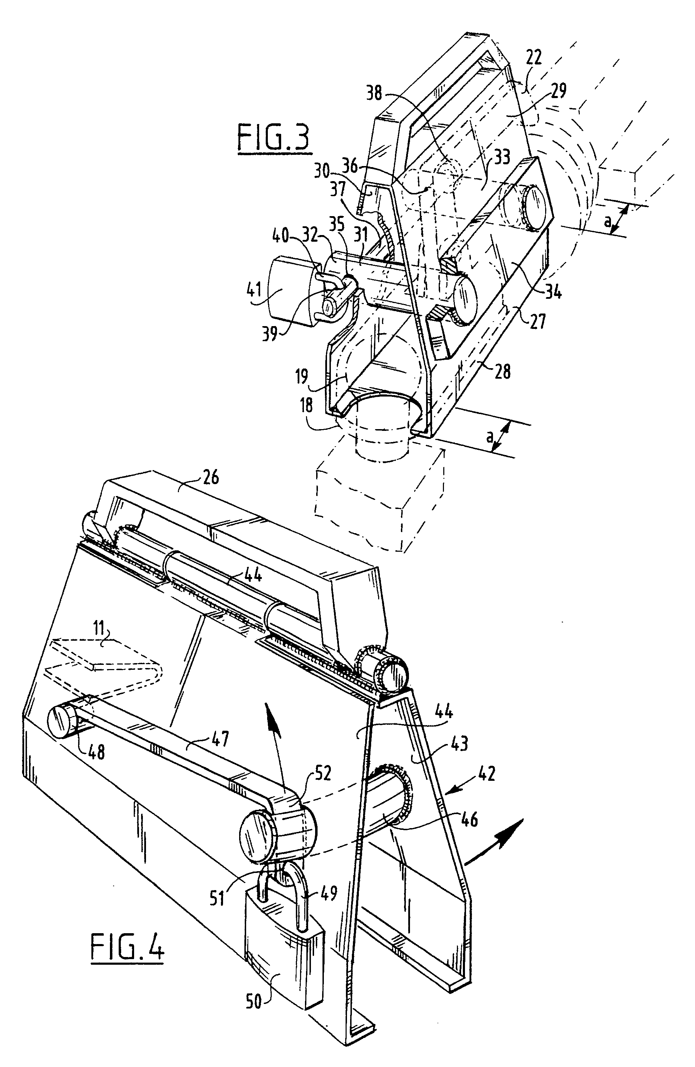

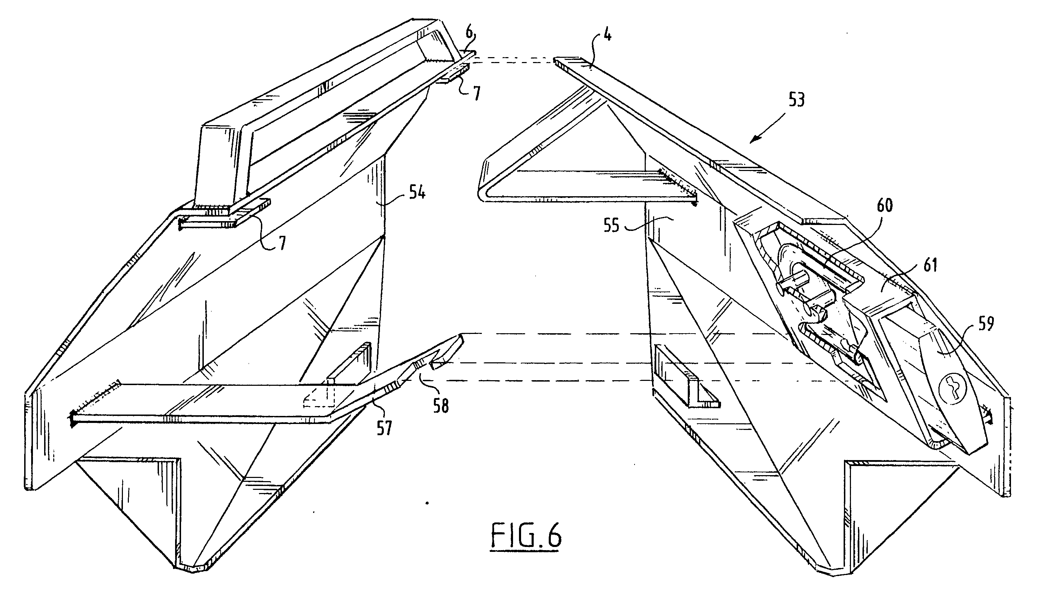

In the situation shown in fig. 1 the device 1 ensures the locking of the coupling cover 18 on tow-hook ball 19. As fig. 3 (to be discussed hereinafter) shows more clearly, an operating lever 22 is situated on the coupling cover which is pressed downward in the connected position and has to be moved upward for disconnecting the coupling cover and tow-hook ball. This upward movement of the operating lever 22 is blocked by the device 1.

The steel plate parts 2, 3 have on their underside respective bent edges 23, 24 with which they grip under the coupling cover 18.

It will be apparent that the fitting of the diverse components has to be dimensioned such that device 1 fits round a coupling cover 18 with small clearance.

As will be apparent particularly from fig. 2, the upper portions of the walls of plate parts 2, 3 taper towards one another. The shape of the key plate 13 is adapted to this shape. Key plate 13 is locked against rotation by bosses 25 arranged on the outside of the part 3. The key is made of steel and can preferably have a hardened outer surface. The parts of the device 1 which lend themselves to being filed, sawn or cut through by persons of malicious intent can generally be of hardened material or undergo a hardening treatment after manufacture.

It is further noted that the bent edge 6 bears a hand-grip 26.

Fig. 3 shows a device 27 which, in contrast to the device according to fig. 1 and 2 and fig. 3 to be discussed hereafter, can only be pushed over coupling cover 18 in the non-connected position.

For this purpose the device 27 consists of a more or less tubular portion 28 the shape of which corresponds largely with the form of the device 1 in the position of use. Reference is made in this respect to fig. 2. The walls 29, 30 have four holes 31 for passage of two pins 32, 33 which on one side are fixedly connected to a bracket 34 and on the other side are provided with holes 35, 36 for passage of a locking pin 37 which carries on its one end a thickening 38 and on the other side a hole 39 for passage of the shackle 40 of a padlock 41. For arranging the device 1 the tubular housing 28 first has to be pushed for a distance designated with a over the coupling cover 8 of the drawbar 21. Coupling onto the tow-hook ball 19 is then carried out, whereafter the device can be pushed back over the distance a and locking can take place.

The device 42 according to fig. 4 comprises two plate-like parts 43, 44 mutually coupled by means of a hinge 45. At variance with the pin 8 according to fig. 1 and 2 the functionally corresponding pin 46 of device 42 is given a curved form with the centre line of hinge 44 as the curve centre. Locking takes place by means of a pivotable locking element 47 supported by a hinge pin 48. The shackle 49 of a padlock 50 can co-act with a hole 51 in the bent over end 52 of locking element 47.

The device 42 according to fig. 4 has the advantage compared with the previously described embodiments that it consists of only two separate components, namely the two parts 43, 44 with the components attached thereto, and the padlock 50.

The device as in fig. 1 is pivotable in contrast to the device according to fig. 3. A variant (not drawn) is as it were a mixture of these two embodiments. In this variant the plate-like parts 43, 44 as in fig. 4 take an integral form as shown in fig. 3. Otherwise than in fig. 3 they are open at the bottom as in fig. 4. The two plate parts with bending stiffness can be connected to one another with some force. The bent edges form zones which behave more or less pivotally.

It will be apparent that the device according to the invention has to be manufactured from sufficiently strong material. Reasonably hard and mechanically strong metal types can be considered particularly suitable. As described above, vulnerable parts, i.e. parts easily lending themselves to mistreatment by persons of malicious intent with tools, can be hardened locally.

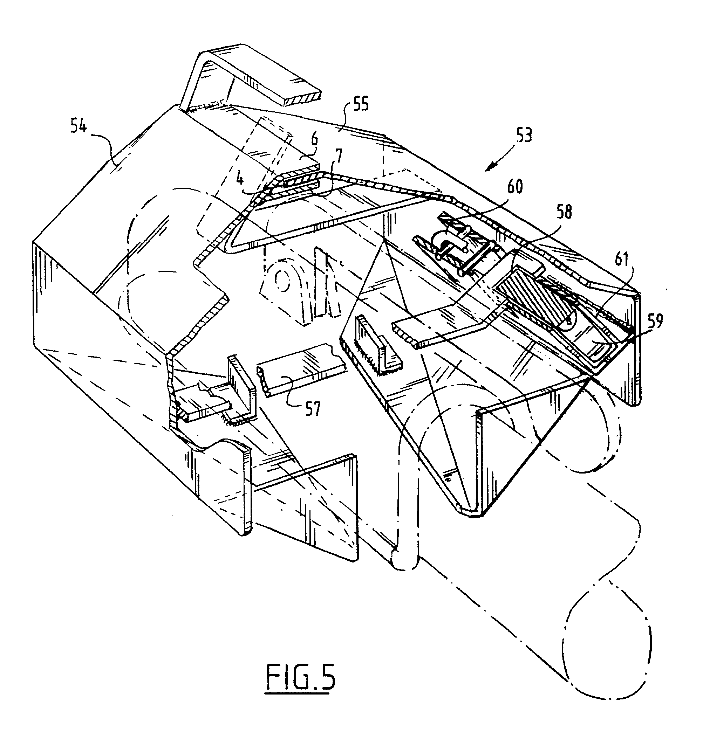

Fig. 5 shows a device 53 of which the two parts 54, 55 can be coupled, as is also clearly shown in fig. 6, by means of a pin 57 having a recess 58 on its end. This can be placed in locking co-action with the housing 59 of a padlock, the shackle 60 of which is fixedly connected to the part 55 of the device 53. When the device 53 is assembled from the two parts 54, 55 the edge 4 is inserted between the top edge 6 and the bottom edge, embodied in this case as two lips 7, of the respective parts 55 and 54, wherein the pin 57 is carried with its free end into the region of the padlock 59, 60.

Fig. 5 shows the situation where padlock 59, 60 is closed and the recess 58 is in locking co-action with the housing 59.

Fig. 6 shows the situation where this coupling is released and the parts 54, 55 are free of one another.

It can be seen clearly from fig. 5 and 6 that the lock 59, 60 is accommodated internally in a housing 61. This ensures still further inaccessibility of the lock for persons of malicious intent.

## Claims

1. Device for locking the coupling between a motor vehicle, for example a passenger car, and a trailer, for example a caravan, which coupling comprises a tow-hook with ball arranged on the motor vehicle and a drawbar arranged on the trailer at the free end of which a coupling means such as a hook, eye or cover for coupling to the towing hook is arranged with blocking means, which device encloses a space wherein the coupling fits with small clearance and is provided with locking means closable by means of a lock, in the position whereof that is closed and arranged round a coupling at least the blocking means are inoperable.

2. Device as claimed in claim 1, **characterized in that** the device comprises two mutually movable parts which in the position of use are mutually lockable by the locking means.

3. Device as claimed in claim 2, **characterized in that** the two parts are separate.

4. Device as claimed in claim 2, **characterized in that** the two parts are connected movably to one another.

5. Device as claimed in claim 3, **characterized in that** the locking means comprise:

   co-acting edges engaging slidably into one another on the respective parts; and

   a pin present on the one part which fits into a hole present in the other part, which pin can be locked against withdrawal at its end by a lock.

6. Device as claimed in claim 5, **characterized in that** the pin has a hole at its free end for co-action with a lock.

7. Device as claimed in claim 6, **characterized in that** the hole can co-act with key means that are lockable by means of a lock.

8. Device as claimed in claim 7, **characterized in that** the hole is a slotted hole and the key means are embodied as a wedge-shaped plate with a hole on the relatively narrow zone serving for passage of the shackle of a padlock, wherein the slotted hole has a length that is smaller than the widest portion of the wedge-shaped plate.

9. Device as claimed in claim 8, **characterized in that** the outer surface of the part in which the hole is situated for passage of the pin has bosses for locking the wedge-shaped plate against rotation.

10. Device as claimed in claim 7, **characterized in that** at least the surface of the key means is hardened.

11. Device as claimed in claim 5, **characterized in that** the lock is accommodated internally in the device.

12. Device as claimed in claim 11, **characterized in that** the lock is a padlock with a housing and a movable shackle, wherein the shackle is coupled to the device, the housing with keyhole is accessible from outside and the housing can be placed in locking co-action with a recess present on the pin.

FIG.1

FIG.2

FIG.3

FIG.4

6

FIG.6

FIG.5